# EUROPÄISCHE PATENTSCHRIFT

(11) **EP 1 144 768 B1**
(45) Veröffentlichungstag und Bekanntmachung des Hinweises auf die Patenterteilung: **02.04.2003**
(21) Anmeldenummer: 99957832.1
(22) Anmeldetag: 16.12.1999
(51) Int. Cl.: E04B 1/82, E04B 1/86

(54) **SCHALLISOLIERUNG ZUM ISOLIEREN VON SCHALLERZEUGENDEN GERÄTEN ODER ANLAGETEILEN, INSBESONDERE VON VIBRATIONSZUFÜHRGERÄTEN BZW. RÜTTLERN**
SOUNDPROOFING FOR INSULATING SOUND PRODUCING DEVICES OR PARTS OF SYSTEMS, ESPECIALLY DEVICES THAT TRANSMIT VIBRATIONS SUCH AS VIBRATORS
DISPOSITIF D'ISOLATION ACOUSTIQUE POUR ISOLER DES APPAREILS OU DES PARTIES D'INSTALLATIONS GENERANT DU BRUIT, EN PARTICULIER DES APPAREILS CONVOYEURS A VIBRATIONS OU VIBREURS

(30) Priorität: 17.12.1998 EP 98123954
(43) Veröffentlichungstag der Anmeldung: 17.10.2001
(73) Patentinhaber: ETIS AG, 9053 Teufen (CH)
(72) Erfinder: WIRTH, Anton, CH-9056 Gais (CH)
(74) Vertreter: Stocker, Kurt
(86) Internationale Anmeldenummer: CH9900609
(87) Internationale Veröffentlichungsnummer: WO00036239

(56) Entgegenhaltungen:
- WO-A-97/48943
- DE-A- 3 636 341
- GB-A- 1 471 889
- US-A- 3 963 094
- US-A- 5 060 752
- PATENT ABSTRACTS OF JAPAN vol. 098, no. 007, 31. März 1998 (1998-03-31) & JP 01 078297 A (TOKYO GAS CO LTD;KANPAI:KK), 23. März 1989 (1989-03-23)

## Beschreibung

Die Erfindung bezieht sich auf Schallisolierungen zum Isolieren von schallerzeugenden Geräten oder Anlageteilen, insbesondere von Vibrationszuführgeräten, mit Isolierelementen, die gegen die Schallquelle hin durch eine Innenberandung und von dieser weg durch eine Aussenberandung berandet sind und schichtförmiges Isoliermaterial mit einem Hohlraumanteil umfassen. Solche Isolierungen werden eingesetzt zum akustischen und gegebenenfalls auch zum thermischen Isolieren von Geräten, Anlageteilen, Motoren oder Maschinen, insbesondere zum Isolieren von Vibrationszuführgeräten. Vorzugsweise umfasst die Erfindung Schallisolierungen, welche beispielsweise im Falle einer Inspektion, Revision oder bei Störungen von Hand schnell entfernt und wieder montiert werden können.

Die bekannten Isoliersysteme weisen verschiedene Nachteile auf. Die häufigste Art der Isolierung ist die sogenannte Kassettenisolierung. Unter einer Kassette versteht man ein Gehäuse aus Stahl- oder Chromstahlblech mit einer offenen Innenseite. Zur Erzielung einer Schalldämpfung werden von der Innenseite her Isoliermatten in die Kassetten eingelegt. Dabei kann die nach innen gerichtete Oberfläche der Isoliermatten flach oder gegebenenfalls dreidimensional strukturiert sein. In der Isoliermatte werden die Luftbewegungen der Schallwellen behindert bzw. gedämpft. Wenn von einer Schall-Reflexion an der Blechwand des Kassetten-Gehäuses ausgegangen wird, so sind die maximalen Luftbewegungen um eine Viertelwellenlänge von dieser Reflexionsfläche entfernt Um diese Luftbewegungen optimal dämpfen zu können müsste die Isoliermatte eine Dicke im Bereich einer Viertelwellenlänge haben. Dies ist mit vertretbaren Schichtdicken nur bei hohen Frequenzen möglich, weil die Wellenlängen im Treftonbereich bis ca. 500Hz Ober 60cm und entsprechend die Viertelwellenlängen über 15cm liegen. Bei 2kHz beträgt die Viertelwellenlänge ca. 4cm und liegt somit im Bereich der gängigerweise eingesetzten Isoliermaterial-Schichtdicken. Entsprechend sind die bekannten Schallisolierungen nur im Hochtonbereich mit Frequenzen über 1kHz wirksam.

Die DE 36 36 341 beschreibt eine thermische Isolierung mit Kassetten bzw. Halbschalen und daran angeordneten Kissen. Die Kissen bestehen aus einer textilen Hülle und einer Füllung aus wärmedämmendem Material, insb. Mineralfasem. Zum seitlichen Abschliessen der Dämmlagen umfassen die Halbschalen radial nach innen vorstehende Flansche. Die Halbschalen werden mittels daran befestigter Spannbügel starr miteinander verbunden und sind dabei in Schall leitendem, direktem gegenseitigen Kontakt. Wenn nun Geräte mit solchen Kassetten umhüllt werden, erstrecken sich im Kontaktbereich zwischen aneinander anschliessenden Kassetten, oder zwischen einem Ring aus Kassetten und einem diesen Ring abschliessenden Deckelelement, metallische Gehäuse-Seitenränder von der InnenzurAussenseite der Isolierung.SolcheGehäuse-Seitenränder bilden Schallbrücken, die für die unerwünschte Schallübertragung nach aussen sehr förderlich sind. Entsprechend haben solche Schallisolierungen selbst im Hochtonbereich eine ungenügende Dämpfung. Zudem führen Resonanzschwingungen der Halbschalen zu schallerzeugenden Relativ-Schwingungen zwischen den aneinander anliegenden Halbschalen-Berandungen.

Analog aufgebaute Kassetten sind auch als Schallisolierung verbreitet.

Die Absorptionskoeffizienten verschiedener Materialien bzw. Wandaufbauten sind frequenzabhängig. Grundsätzlich kann gesagt werden, dass Fasermaterial im Bereich um 1kHz einen hohen Absorptionskoeffizienten aufweist. Die Messungen an einer mit Fasermaterial beschichteten Betonwand zeigen beispielsweise Absorptionskoeffizienten von 0.14, 0.20, 0.79, 0.37 bei den Frequenzen 125Hz, 250Hz, 1kHz, 4kHz Eine Sperrholzplatte hat im Tieftonbereich erhöhte Absorbtionskoeffizienten. Im Rahmen einer Messung wurden an einer Sperrholzplatte beispielsweise Absorptionskoeffizienten von 0.60, 0.30, 0.09, 0.09 für die Freqeunzen 125Hz, 250Hz, 1kHz, 4kHz bestimmt. Die erhöhte Absorption in Tieftonbereich ist mit einem Mitschwingen und der energieaufnehmenden inneren Reibung der Sperrholzplatte erklärbar. Die geringe Absorption im Hochtonbereich zeigt, dass die hochfrequenten Schwingungen aufgrund der kleinen Amplituden wenig reibungsaktiv sind.

Nebst den nach innen offenen Kassetten werden auch Kassetten eingesetzt, die als innere Berandung ein Lochblech umfassen, so dass an die weiche Isolierschicht sowohl aussen als auch innen eine Blechfläche angrenzt. Dadurch soll eine Absorption im Tieftonbereich mit der Absorption von Fasermatten im Hochtonbereich kombiniert werden. Durch die Löcher des innen angeordneten Lochbleches werden schalldämpfende Resonatoren zwischen den beiden Blechen gebildet bzw. offen gehalten. Die Resonatoren und die Isolierschicht gewährleisten entsprechend der jeweiligen Dimensionierung der Resonatoren bzw. der Absorptionseigenschaft des Isoliermaterials eine Schaliabsorption in entsprechenden Frequenzbereichen. Die zusammenhängende Fläche des innen angeordneten Lochbleches bildet zumindest für den Hochtonbereich eine Reflexionsfläche. Der an dieser Reflexionsfläche reflektierte Schallanteil kann entsprechend der Gestalt des von der Isolierung abgegrenzten Innenraumes für verschiedene Frequenzbereiche Resonanzen anregen, die über Schallbrücken nach aussen abgestrahlt werden.

Die bekannten Schallisolierungen zum Ummanteln von Apparaten gewährleisten eine relevante Schalldämpfung meist nur in bestimmten Frequenzbereichen des Hochtonbereiches.

Weil aber viele Geräte Schall mit Anteilen in weit auseinanderliegenden Frequenzbreichen erzeugen, sind zumindest einzelne Frequenzanteile zuwenig gedämpft. Bei Apparaten mit sehr hohen Schallpegeln können die Immissions-Grenzwerte bzw. die Richtwerte mit den bekannten Isolierungen nicht eingehalten werden, insbesondere wenn in einem Arbeitsraum verschiedene solcher Apparate angeordnet sind.

Aus der WO97/48943, einer Patentanmeldung des gleichen Anmelders, ist eine direkt an der dreidimensionalen Aussenfläche von Bauteilen anliegende Isolierung bekannt. Diese umfasst eine am Bauteil anliegende Kontakt- bzw. Reibungsschicht aus Blech und/oder Drahtnetz. Um eine Stabilität der Isolierelemente zu erzielen und Axialkräfte zwischen aneinander anschliessenden Isolierelementen aufnehmen zu können, werden an den Stirnseiten der Isolierelemente feste Stützhalbringe angeordnet, die am Bauteil anliegen und sich über die ganze Dicke des Isolierelementes erstrecken. Diese Stützhalbringe, bzw. festen Rippen bilden unerwünschte Schallbrücken die sich im wesentlichen über die ganze Mächtigkeit der Isolierelemente erstrecken und dadurch Schall vom Innern der Isolierung an die Umgebung übertragen. Ein weiterer Nachteil der Isolierungen gemäss WO97/48943 besteht darin, dass diese nur direkt am Bauteil angeordnet werden können und nicht in einem gewünschten Abstand dazu. Zudem sind diese Isolierungen vorallem als thermische Isolierungen ausgelegt und haben nicht im gesamten Frequenzbereich die gewünschten Dämpfungseigenschaften.

Vibrationszuführgeräte, sogenannte Rüttler, haben die Aufgabe Bestandteile, die in einem automatischen Montageprozess gebraucht werden, seriell und insbesondere richtig getaktet bereitzustellen. Dazu haben die Rüttler die Form eines Beckens mit einem gewölbten Boden und seitlich konischer Berandung. An der konischen Berandung ist zumindest eine spiralförmige Rampe ausgebildet. Das Becken wird durch Magnet-Metallfederpakete, die zwischen dem Becken und einem massiven Fuss angeordnet sind, in Schwingung versetzt. Aufgrund der Schwingung bewegt sich die in der Schüssel aufgenommenen Stücke zur Beckenwand hin und auf der Rampe zum Ausgabeende der Rampe. Der von den Rüttlem ausgehende Lärm hat zwei verschiedene Quellen. Einerseits geht von den Magnet-Metallfederpaketen ein tieftonartiges Brummen, das sogenannte Transformatoren-Brummen aus. Der Schallpegel dieses Tieftonanteils ist sehr hoch. Es wurde beispielsweise bei 16Hz ein Schalldruckpegel von 90dB(A) gemessen. Andererseits erzeugt das bewegte Stückgut einen Lärm im Hochtonbereich. Dieser Lärm entsteht durch Relativbewegungen zwischen dem Stückgut und dem vibrierenden Becken bzw. der Rampe und durch Stösse zwischen aneinander angrenzenden Stücken des Stückgutes. Es gibt auch Stücke mit von der Vibration anregbaren Eigenresonanzen. Weitere Lärmquellen sind gegebenenfalls vorgesehene Blasdüsen oder Ablenkungseinrichtungen, die etwa eine gewünschte Weiterführung des vereinzelten Stückgutes gewährleisten.

Abhängig vom jeweils eingefüllten Stückgut können bei Rüttlem Lärmpegel von mehr als 100dB auftreten, was für das Bedienungspersonal gesundheitsgefährdend ist und zudem die Produktivität mindert. Die bekannten Rüttler-Schallschutzmassnahmen umfassen etwa zwei halbringförmige Isolierkassetten mit einem nach innen offenen Blechgehäuse und einer 30mm dicken Noppenschaum-Schicht aus Polyurethan. Diese beiden Kassetten werden ringförmig um den Rüttler zusammengefügt. Sie dürfen nicht mit dem Rüttler in Kontakt sein, weil sonst die Rüttlerbewegungen gestört werden. Auf dem oberen stimseitigen Gehäuserand bzw. Flansch wird ein 5mm dicker Plexiglas-Deckel aufgesetzt. Durch den Plexiglas-Deckel kann der Vorrat und die Vereinzelung im Rüttler vom Betriebspersonal optisch kontrolliert werden. Das vereinzelte Stückgut gelangt durch eine Austrittsöffnung aus dem Innenraum der Isolierung zu einer Bearbeitungsstation. Es hat sich nun gezeigt, dass mit einer derartigen Schallisolierung lediglich eine totale Schallreduktion von maximal 10dB(A) erzielbar ist. Daher liegt bei einem Rüttler mit hohem Schallpegel auch der Schallpegel des isolierten Rüttlers über dem bei industriellen Tätigkeiten maximal tolerierbaren Dauerschalldruckpegel von 85dB(A). Insbesondere ist die Dämpfung im Tieftonbereich bzw. die Dämpfung des Transformatoren-Brummens sehr schwach. Der in der Umgebung auftretende grosse Schallanteil wird als Körperschall und als Luftschall nach aussen übertragen.

Die Aufgabe der vorliegenden Erfindung besteht nun darin, eine Isolierung zu finden, die sowohl die Luftschall- als auch die Körperschall-Übertragung stark reduziert. Es soll gesamthaft eine gegenüber den bekannten Schallisolierungen deutlich erhöhte Reduktion des totalen Schallpegels erzielt werden. Dabei soll insbesondere eine Redukton im gesamten hörbaren Frequenzbereich, also sowohl im Tiefton- als auch im Hochtonbereich erzielt werden, so dass die Schallisolierung vielseitig einsetzbar ist.

Diese Aufgabe wird durch die Merkmale des Anspruches 1 gelöst. Die abhängigen Ansprüche beschreiben alternative bzw. vorteilhafte Ausführungsformen.

Beim Lösen der Aufgabe wurde erkannt, dass alle möglichen Schalldämpfungsmassnahmen unabhängig voneinander möglichst vollständig wirksam sein müssen. Mit einer textilen Dämpfungsmembran, die vorzugsweise zumindest teilweise aus Kunstfaserinsbesondere Glasfaser-Faden und/oder Draht gebildet ist, wird ein breitbandiges Absorptionsspektrum erzielt. Die textile Dämpfungsmembran ist vorzugsweise als Gewebe, gegebenenfalls aber als Geflecht, Maschenware, Drahtnetz oder Drahtgitter ausgebildet. Es handelt sich also um eine textile Fläche bzw. um textiles Material, wobei aber auch nicht gewebte aber miteinander verbundene multidirektionale Draht- oder gegebenenfalls Fadenschichten als Dämpfungsmembran eingesetzt werden können. Die Dämpfungsmembran hat vorzugsweise eine hohe Dichte und ist gegebenenfalls beschichtet. Dadurch wird die Trägheit der Dämpfungsmembran so erhöht, dass sie im Tieftonbereich die gewünschte inelastische Dämpfung erzielbar macht. Es versteht sich von selbst, dass die Trägheit der Dämpfungsmembran entsprechend der jeweiligen Anwendung bzw. dem effektiven Frequenzspektrum durch die Anpassung des Querschnittes, der Dichte und des Materials des Fadens und/oder des Drahtes optimiert werden kann. Wobei aber eine Standartausführung der Dämpfungsmembran meist genügt. Eine Dämpfungsmembran die gewebeartig ausgebildet ist, macht nebst der inneren Reibung in den Fäden bzw. Drähten auch eine mechanische Reibung zwischen einander kontaktierenden Faden- bzw. Drahtabschnitten erzielbar. Diese Reibung gewährleistet eine hohe Schallabsorptionsfähigkeit der mitschwingenden Dämpfungsmembran.

Aufgrund ihrer textilen Struktur hat die Dämpfungsmembran keine als Reflexionsfläche wirkenden grossen Teilbereiche mit glatter Oberfläche. Die textile bzw. gewebeähnliche Struktur umfasst vorzugsweise eine hohe Dichte an Durchtrittsöffnungen, so dass sie für den Hochtonbereich durchlässig ist. Der Hochtonanteil wird nach dem Durchtritt durch die Dämpfungsmembran im weichen Isoliermaterial stark absorbiert. Das Isoliermaterial besteht aus langfaserigem Schichtmaterial, vorzugsweise aus Silikatfasermatten und weist dabei zusammenhängende Luftkanalsysteme zur Hochtonabsorption auf. Bereits beim Durchtritt des Hochtonanteils durch die, insbesondere mit einem Tieftonanteil mitschwingende, Membran tritt eine die Dämpfung verstärkende Diffraktion an den Gewebedurchtrittsöffnungen auf. Die hohe Dichte äusserst kleiner Durchtrittsöffnungen ermöglicht stark reibungsaktive Luftbewegungen relativ zur Membran. Ein rein elastisches Mitschwingen der Dämpfungsmembran wird dadurch verhindert. Diese Gewebedurchtrittsöffnungen sind nicht wie bei Lochblechen als Eintrittsöffnungen von diskreten Resonatoren zu verstehen. Daher ist die Absorption auch nicht auf enge Frequenzbereiche beschränkt.

Als Dämpfungsmembran ist insbesondere auch ein Drahtgewebe einsetzbar, wobei bei hohen Temperaturen, oder möglicher Feuchtigkeit, vorzugsweise Chrom-., bzw. Edelstahldraht verwendet wird. Wenn eine Dämpfungsmembran nicht hohen Temperaturen ausgesetzt ist, kann diese gegebenenfalls auch aus synthetischen, vorzugsweise aber aus Glas- oder Keramikfaser-Fäden, gegebenenfalls mit eingeflochtenen Drähten, gebildet sein. Dabei soll die Massen-Flächendichte, Luftdurchlässigkeit, Schwingungs- und Reibungs- bzw. Dämpfungseigenschaft so optimiert werden, dass die gewünschte Reduktion des Lärms erzielt wird. Ein verwendetes Drahtgewebe hat 130 Maschen/cm² (mesh/ cm²) und eine offene Fläche im Bereich von 40-55%, beispielsweise von ca. 51%. Das Gewicht dieses Drahtgewebes beträgt ca. 0.910kg/m² bei einem Drahtdurchmesser von ca. 0.25mm. Weil der Effekt dieses groben Drahtgewebes nur schwach ist, wurden auch Mikrofilter-Metallgewebe verwendet.

Mikrofilter-Metallgewebe haben sehr hohe Maschenzahlen, gegebenenfalls spezielle Webstrukturen und werden aus Drähten mit kleinem Querschnitt gebildet. Entsprechend sind Filterfeinheiten von wenigen Mikrons - beispielsweise von 20µ - und kleine Luftdurchtrittsquerschnitte, bzw. Luftdurchlässigkeitswerte erzielbar. Die Drähte des Mikrofilter-Flachmaterials haben vorzugsweise Durchmesser im Bereich von 0.02mm bis 0.4, insbesondere von 0.04mm bis 0.13mm und die Maschenzahl in einer Richtung liegt insbesondere im Bereich von 80 bis 1000 1/cm. Ein handelsübliches Mikrofilter-Metallgewebe mit einem Kettdrahtdurchmesser von 0.042mm und einem Schussdrahtdurchmesser von 0.125mm hat eine Maschenzahl von 600x125 pro cm². Dieses Filtergewebe hat ein Gewicht von ca. 0.850kg/ m², was im wesentlichen mit dem Gewicht des bereits erwähnten Drahtgewebes übereinstimmt. Nebst der unterschiedlichen Luftdurchlässigkeit besteht ein weiterer Unterschied zwischen diesen beiden beispielhaft aufgeführten Drahtgeweben in deren Beweglichkeit. Das Gewebe mit den dickeren Dähten ist deutlich biegestarrer, was das Mitschwingen im kurzwelligen bzw. hochfrequenten Schallbereich beeinträchtigt. Weil das Mikrofilter-Metallgewebe in Schussrichtung einen deutlich grösseren Drahtdurchmesser hat, als in Kettrichtung, ist es in Schussrichtung deutlich biegestarrer als in Kettrichtung. Bei der Verwendung von unterschiedlich dicken Kett- und Schussdrähten, kann bei Mikrofilter-Metallgeweben zumindest in einer Richtung eine optimale, schalldämpfungsaktive Biegestarrheit erzielt werden.

Wenn nun aber zum Erzielen einer optimierten Tieftonabsorption die Turbulenzbildung an den Durchtrittsöffnungen und/oder das Gewicht pro Fläche und/oder die Reibung in der schwingenden Membran erhöht sein soll, so kann beispielsweise lediglich die Innen- oder die Aussenhaut oder gegebenenfalls eine weitere Lage, insbesondere eine Zwischenlage zwischen der Innen- und der Aussenhaut mit einer anderen Luftdurchlässigkeit undloder einem höheren Gewicht pro Fläche und/oder mit einer höheren Reibungswirkung bzw. Deformations-Energieaufnahme vorgesehen werden.

Die Kombination der Dämpfungsmembran mit dem weichen Isoliermaterial hat zudem den Vorteil, dass die tieffrequente Bewegung der Dämpfungsmembran nicht nur durch innere Reibung und durch die mechanische Reibung im Gewebe, sondern auch durch das reibungswirksame Verformen des Isoliermaterials aufgrund der dagegen bewegten Dämpfungsmembran gebremst wird. Dabei übernimmt das Isoliermaterial beim Komprimieren die Funktion einer zumindest teilweise inelastischen Federung der Dämpfungsmembran. Diese Reibungs- bzw. Dämpfungseffekte ermöglichen eine breitbandige inelastische Dämpfung mit Hilfe der Dämpfungsmembran im Bereich der Innenberandung eines Isolierelementes.

Das feste Flachmaterial stellt mindestens eine im wesentlichen glatte Reflektionsfläche bereit, die einerseits das Austreten von Schall reduziert und andererseits das innere Schallfeld so beeinflusst, dass die Knotenflächen des reflektierten Schalls an dieser Reflektionsfläche ausgebildet sind. Dadurch wird auch die Dämpfungswirkung des an die Reflektionsfläche gegen die Innenberandung hin anschliessenden Isoliermaterials erhöht, weil sich dieses Isoliermaterial somit nicht im Bereich von Knotenflächen befindet. Das feste Flachmaterial ist gegebenenfalls einschichtig aus Metall, insbesondere mit einer Mächtigkeit der Metallschicht von mindestens 1.5mm, gegebenenfalls aber zumindest zweischichtig aus Metall und Gummi bzw. gummiähnlichem Material, insbesondere mit einer der Innenberandung zugewandten Gummischicht, aufgebaut.

Es versteht sich von selbst, dass das feste Flachmaterial durch Biegen oder Pressen, gegebenenfalls aber auch durch Giessen oder Extrudieren in die gewünschte Form gebracht werden kann, wobei gegebenenfalls nebst metallischem Material auch Kunststoffe und Gummi einsetzbar sind. Das feste Flachmaterial gewährleistet eine Formstabilität der Isolierelemente, die nicht von Stützringen ausgeht, sondern von einer stabilen bzw. fest geformten Mantelfläche. Dadurch können Schallbrücken vermieden werden und es wird zudem mindestens eine für die Dämpfung wichtige Reflexionsfläche bereitgestellt. Isolierelemente mit einer Sicht aus festem Flachmaterial können sowohl freistehend als auch am Bauteil montierbar ausgebildet werden. Bei einer Montage am Bauteil muss die Form des festen Flachmaterials an die Form des Bauteils angepasst sein. Dazu werden die Schichten der Isolierelemente aus Zuschnitten hergestellt, die das Anliegen am Bauteil gewährleisten. Die Wahl solcher Zuschnitte ist aus der WO97/48943 bekannt. Im Rahmen der vorliegenden Erfindung soll auch der Inhalt der WO97/48943 als geoffenbart gelten.

Ein erfindungsgemässes Isolierelement gewährleistet gleichzeitig die optimale Wirkung der drei Elemente, nämlich der Dämpfungsmembran, des Isoliermaterials und mindestens einer Reflektionsfläche. Die Gesamtwirkung ist aber nicht nur als Überlagerung der Einzelwirkungen zu verstehen, sondern durch die vorgeschlagene Anordnung der drei Elemente und die beschriebene Ausgestaltung der Dämpfungsmembran kann ein über die Summe der Einzelwirkungen hinausgender Effekt erzielt werden.

Um die Isolierelemente einfach und schalldicht miteinander verbinden zu können, umfassen diese mindestens zwei Hüllenlagen vorzugsweise aus Glasfasergewebe. Eine Hüllen-Innenlage ist der Schallquelle zugewandt und bildet somit eine Dämpfungsmembran. Gegebenenfalls ist aber an der Hüllen-Innenlage eine der Schallquelle zugewandte zusätzliche Dämpfungsmembran, vorzugsweise ein Drahtgewebe, angeordnet. Eine Hüllen-Aussenlage ist im Bereich der Aussenberandung angeordnet. Diese beiden Hüllenlagen sind zu einer geschlossenen Hülle verbunden. An den Hüllen-Aussenlagen sind erste Klettbänder und Lappen mit passenden zweiten Klettbändern befestigt, so dass aneinander anschliessende Isolierelemente mittels dieser Klettverbindungen dicht aneinander festsetzbar sind. Um das Entstehen von Austrittsspalten oder -öffnungen zu verhindern, erstrecken sich die Klettverbindungen vorzugsweise entlang der gesamten Kontaktbereiche zwischen den zu verbindenden Isolierelementen. Gegebenenfalls sind auch Klettverbindungen an den stirnseitig aufeinander treffenden Kontaktbereichen ausgebildet.

Bei Rüttlern oder Geräten ist es zweckmässig den Rüttler bzw. das Gerät bodenseitig auf einer Schaumstoffschicht zu lagern. Ringförmig um den Rüttler bzw. das Gerät sollen mindestens zwei Isolierelemente die auch auf der Schaumstoffschicht aufliegen, zu einem geschlossenen Mantel zusammengestellt werden. Dieser Mantel wird an der oberen Stirnseite mit mindestens einem weiteren ring- bzw. teilringförmigen Abschluss-Isolierelement verbunden. Durch das Verbinden der Hüllen mit Klettverschlüssen entstehen dichte aber nicht starre Verbindungen ohne Schallbrücken. Um trotz der Schallisolierung den Rüttler optisch überwachen zu können, ist vorzugsweise eine Kontrollöffnung mit einem Deckel in diesen Abschluss-Isolierelementen ausgebildet. Der Deckel umfasst zwei beabstandet angeordnete transparente Platten.

Die Zeichnung erläutert die erfindungsgemässe Schallisolierung anhand von Ausführungsbeispielen. Dabei zeigt
- Fig. 1: einen vertikalen Schnitt durch eine um einen Rüttler angeordnete Schallisolierung,
- Fig. 2a: eine Draufsicht auf einen Isoliermantel mit zwei halbzylinderförmigen Isolierelementen,
- Fig. 2b: eine Draufsicht auf einen Isoliermantel mit 6 ebenen Isolierelementen,
- Fig. 3a: eine perspektivische Darstellung einer Rüttler-Isolierung auf einem höhenverstellbaren Teller,
- Fig. 3b: eine perspektivische Darstellung der Deckel-Isolierung gemäss Fig. 3a,
- Fig. 3c: eine perspektivische Darstellung eines Haltegestelles für eine Isolierung gemäss Fig. 3a,
- Fig. 4: eine perspektivische Darstellung eines Zyklons mit einer Schallisolierung,
- Fig. 5: ein Schnitt durch ein Isolierelement, der Schallisolierung gemäss Fig. 4, bei der das feste Flachmaterial als Lochblech im Bereich der Innenberandung angeordnet ist;
- Fig. 6: ein Schnitt durch ein Isolierelement, bei dem das feste Flachmaterial als Platte im Bereich der Aussenberandung angeordnet ist und bei dem zwischen zwei Isoliermaterial-Schichten eine Hüllen-Zwischenlage angeordnet ist,
- Fig. 7: ein Schnitt durch ein Isolierelement mit festem Flachmaterial im Bereich der Aussenberandung, einer Isoliermaterial-Schicht und einer Hülle deren Hüllen-Innenlage die Dämpfungsmembran bildet,
- Fig. 8 und 9: eine Messkurve des Schalldämm-Masses in dB nach ISO 140-3.1995 für Terzband-Frequenzen von 50 bis 5000Hz und eine daran angepasste Bezugskurve nach ISO 717

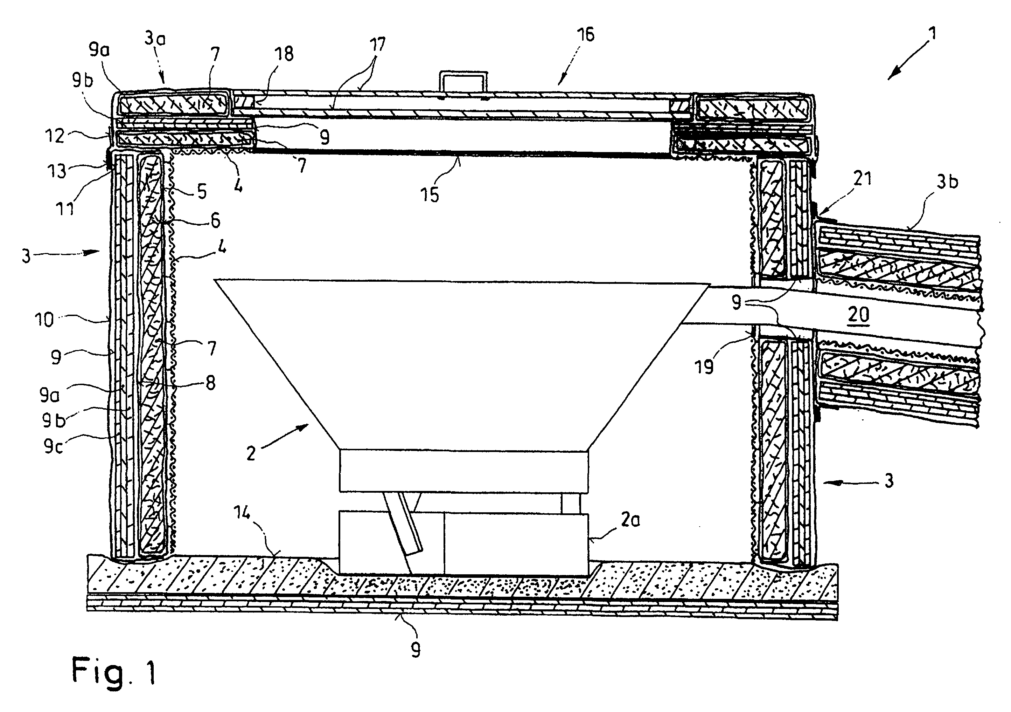

FIG.1 zeigt eine Schallisolierung 1 für einen Rüttler 2. Die Schallisolierung 1 umfasst Isolierelemente 3 mit einer die Innenberandung bildenden Dämpfungsmembran 4. Die Dämpfungsmembran 4 ist vorzugsweise an einer daran anschliessenden Hüllen-Innenlage 5 befestigt. Gegebenenfalls sind Faden- oder Drahtverbindungen 6, insbesondere entlang der seitlichen Berandungen, zwischen der Dämpfungsmembran 4 und der Hüllen-Innenlage 5 ausgebildet. Die dargestellte Ausführungsform hat ein V4A-Drahtgewebe als Dämpfungsmembran 4. Es versteht sich von selbst, dass auch textile Flächen aus synthetischen Fäden, gegebenenfalls mit eingeflochtenen Drähten, eingesetzt werden können, wenn die damit hergestellten Dämpfungsmembrane 4 ähnliche Massen-Flächendichten, Schwing- und Reibungs- bzw. Dämpfungseigenschaften haben. Ein verwendetes Drahtgewebe hat beispielsweise 130 Maschen/cm² (mesh/ cm²) und eine offene Fläche im Bereich von 40-55%, insbesondere von ca. 51%. Das Gewicht dieses Drahtgewebes beträgt ca. 0.910kg/m² bei einem Drahtdurchmesser von ca. 0.25mm.

Auf der von der Dämpfungsmembran 4 abgewandten Seite der Hüllen-Innenlage 5 schliesst Isoliermaterial 7, vorzugsweise in der Form von langfasrigem Schichtmaterial, insbesondere in der Form von Silikatfasermatten an. Im dargestellten Ausführungsbeispiel schliesst eine Hüllen-Zwischenlage 8 an das Isoliermaterial 7 an. Dabei bilden die Hüllen-Innenlage 5 und die Hüllen-Zwischenlage 8 eine geschlossenen Hülle um das Isoliermaterial 7. Ein festes Flachmaterial 9 ist auf der der Dämpfungsmembran 4 abgewandten Seite des Isoliermaterials 7 angeordnet. Das feste Flachmaterial 9 ist in der Fig. gegenüber dem Isoliermaterial 7 mit einer überhöhten Mächtigkeit dargestellt, um eine Ausführungsform mit einem dreischichtigen Flachmaterial veranschaulichen zu können.

Das feste Flachmaterial 9 umfasst zumindest eine erste Reflexionsfläche mit im wesentlichen glatter Oberfläche und besteht vorzugsweise zumindest aus einer Metallschicht 9a. Diese Metallschicht 9a hat eine Mächtigkeit von mindestens 1.5mm und besteht vorzugsweise aus Eisen, welches aufgrund der hohen Dichte von ca. 7.9*10³ kg/m³ auch bei kleinen Schichtdicken bereits eine für die gute Reflexion benötigte genügend hohe Trägheit, bzw. eine grosse Masse pro Fläche bereitstellt. Bei leichteren Metallen, wie etwa Aluminium mit einer Dichte von ca. 2.7*10³ kg/m³, muss die Schichtdicke zum Erzielen einer gleich grossen Masse pro Fläche entsprechend, bzw. um den Faktor 3, erhöht werden. Um eine zweite Reflektionsfläche bereitzustellen, wird gegebenenfalls auf der dem Isoliermaterial 7 zugewandten Seite des festen Flachmaterials 9 eine erste Gummischicht 9b aus Gummi oder gummiähnlichem bzw. kautschukartigem Material angeordnet. Der von der Innenberandung her auf das feste Flachmaterial 9 auftreffende Schall wird zumindest an der ersten, gegebenenfalls aber vorgängig bereits teilweise an der zweiten, Reflexionsfläche reflektiert. Weil eine Gummischicht auch Schall absorbiert, wird die Schallintensität in der Gummischicht zweimal reduziert, nämlich auf dem Weg zur ersten Reflektionsfläche und auf dem Weg des reflektierten Schalls zurück gegen die Innenberandung des Isolierelementes 3. Aufgrund der Dämpfungseigenschaft des gummiartigen Materials ist es gegebenenfalls auch zweckmässig auf der Aussenseite des festen Flachmaterials 9 eine zweite Gummischicht 9c anzuordnen, so dass der durch die Metallschicht 9a durchtretende Schallanteil nur gedämpft abgestrahlt werden kann.

Um das feste Flachmaterial 9 mit dem Isoliermaterial 7 und der Dämpfungsmembran 4 einfach verbinden zu können, ist vorzugsweise eine Hüllen-Aussenlage 10 als Aussenberandung des Isolierelementes 3 angeordnet. Diese Hüllen-Aussenlage 10 ist etwa mit der Hüllen-Innenlage 5 oder mit der Hüllen-Zwischenlage 8 bzw. mit der um das Isoliermaterial 7 angeordneten geschlossenen Hülle verbunden. Um das Eindringen von Flüssigkeit von aussen in das Innere eines Isolierelementes 3 zu verhindern, ist die Hüllen-Aussenlage vorzugsweise mit Silikon beschichtet. Diese Beschichtung führt zu einer geschlossenen Aussenberandung und erhöht dadurch die Isolationseigenschaft des Isolierelementes 3. Die Hüllen-Innenlage 5 ist vorzugsweise luftdurchlässig und hat auch eine ähnliche Dämpfungswirkung wie die Dämpfungsmembran 4, wobei aber vorzugsweise das Gewicht pro Fläche etwas tiefer ist, die Gewebe-Duchtrittsöffnungen etwas kleiner sind und deren Anzahl pro Fläche etwas höher ist. Dadurch ist das Absorptionsspektrum dieser Hüllen-Innenlage 5 etwas gegen höhere Frequenzen verschoben im Vergleich zu demjenigen der Dämpfungsmembran 4.

Die Hüllenlagen sind als textile Flachmaterialien ausgebildet, vorzugsweise gewoben, gegebenenfalls aber geflochten oder gestrickt. Weil sie vorallem die Funktion des Zusammenhaltens übernehmen, könnten sie gegebenenfalls auch als Netze ausgebildet sein. Zur Herstellung der Hüllenlagen können die verschiedenartigsten, Fäden aus natürlichen oder synthetischen Materialien, wie etwa Glasfasern, Kunstfasern, Keflarfasern, Kohlenstofffasern und auch Drähte insbesondere Edelstahldrähte verwendet werden. Die Fäden und eventuell auch die Drähte können beschichtet sein. Bei den Drähten sind etwa V4A Drähte mit Durchmessern im Bereich von beispielsweise 0.062 mm zweckmässig. Die Wahl eines Fadens bzw. eines Drahtes hängt dabei sowohl von der zu erwartenden Temperatur- und Reibungsbeanspruchung als auch von der Art der Verarbeitung zum textilen Material ab. Für die Hüllen-Innenlage 5 und gegebenenfalls auch für die Hüllen-Zwischenlage 8 werden insbesondere Gewebe aus Glasfasern eingesetzt, die mit Metalldrähten durchwoben sind.

Um lediglich eine minimale Anzahl von Hüllenlagen einzusetzen, wird gegebenenfalls die Hüllen-Aussenlage 10 direkt mit der Dämpfungsmembran 4 verbunden, so dass diese beiden Schichten zusammen eine geschlossene Hülle um das Isoliermaterial 7 und das feste Flachmaterial 9 bilden. Es hat sich gezeigt, dass mit einer totalen Mächtigkeit des Isolierelementes 3 im Bereich von ca. 4cm bereits die gewünschte Schallisolierung erzielbar ist. Dabei wird diese Mächtigkeit im wesentlichen vom Isoliermaterial beansprucht. Die Dämpfungsmembran 4 und die Hüllenlagen 5, 8, 10 haben Dicken im Bereich von lediglich ca. 1mm. Das feste Flachmaterial hat eine Dicke im Bereich von 1.5 bis 10mm.

Das feste Flachmaterial 9 übernimmt nebst der Reflexionsfunktion auch die Formgebungsfunktion. Indem das feste Flachmaterial 9 beispielsweise in der Form eines Zylindermantel-Teils ausgebildet wird, kann ein Isolierelement 3 mit der gleichen Form bereitgestellt werden. Es versteht sich von selbst, dass somit Isolierelemente 3 mit den verschiedenartigsten Formen bereitgestellt werden können. Gegebenenfalls ist es zweckmässig anstelle eines kreiszylinderförmigen Isoliermantels mehrere ebene Isolierelemente 3 zu einem geschlossenen Mantel zu verbinden, um ein anderes Reflektionsverhalten im Inneren der Isolierung zu erzielen. Wenn der Schall im Innern der Isolierung mehrfach reflektiert wird, kann davon ausgegangen werden, dass die Schallwellen auch schräg auf ein Isolierelement 3 auftreffen und dadurch für die Dämpfungsmembran 4 und das Isoliermaterial 7 andere wirksame Wellenlängen, bzw. für die Schallwelle scheinbar erhöhte Schichtdicken wirksam sind. Das heisst, dass die Dämpfungseigenschaft der Isolierung durch eine zweckmässige räumliche Gestaltung der Isolierung noch erhöht werden kann.

Um Isolierelemente 3 mittels Klettverbindungen miteinander verbinden zu können, werden an den Hüllen-Aussenlagen 10 erste Klettbänder 11 und/oder Lappen 12 mit passenden zweiten Klettbändern 13 befestigt. Die Klettverbindungen erstrecken sich vorzugsweise entlang der gesamten Kontaktbereiche zwischen den zu verbindenden Isolierelementen 3. Die Lappen 12 sind vorzugsweise aus Glasfaserstoff hergestellt und insbesondere mit Silikon beschichtet. Mit diesen Verbindungen 15 können Schallaustritts-Spalte vermieden werden, ohne dabei Schallbrücken bildende Flansche zu verwenden.

Weil die Schichten der Isolierelemente 3, nämlich die Dämpfungsmembran 4, die Hüllen-Innenlage 5, das Isoliermaterial 7, das feste Flachmaterial 9 und die Hüllen-Aussenlage 10 aus Teilen von flächigen Materialbahnen hergestellt sind, kann durch die richtige Wahl von Zuschnitten und das Zusammenstellen dieser Zuschnitte ein Isolierelement mit beliebiger Form bzw. Innenberandung bereitgestellt werden. Die Formgebung des festen Flachmaterials kann auch durch Biege- oder Pressverfahren gegebenenfalls auch durch Gussverfahren erfolgen. Bei Bedarf können die erfindungsgemässen Isolierelemente somit im wesentlichen exakt an ein Bauteil angepasst werden. Versuche haben gezeigt, dass die Schallisolierung auch mit am Bauteil anliegender Dämpfungsmembran eingesetzt werden kann. Daher ist die erfindungsgemässe Isolierung auch besonders vorteilhaft bei der Isolierung von Lärm abstrahlenden Rohren und anderen Anlageteilen. Die Isolierung wird dann nicht vom Boden her aufgestellt, sondern in der Form einer Ummantelung direkt am Bauteil angebracht. Dabei werden um Rohre beispielsweise halbschalen-förmige Isolierelemente 3 angeordnet und mit ihren Klettverbindungen verbunden.

Um zu verhindern, dass vom Fuss 2a des Rüttlers 2 Körperschall in die Lagerfläche bzw. den Boden unter dem Rüttler gelangt, wird der Fuss 2a vorzugsweise auf einer elastisch verformbaren Schaumstoffschicht 14 gelagert. Auf der Oberseite der Schaumstoffschicht 14 sind die Poren vorzugsweise offen, so dass diese Poren auch effizient Schall absorbieren können. Weil die Lagerfläche des Rüttlers meist eine gute Barriere gegen den Austritt von Luftschall ist, kann die Isolierung am Boden bzw. unter dem Rüttler optimal auf die Dämpfung des Körperschall-Autrittes ausgerichtet werden. Es versteht sich von selbst, dass zusätzlich zur, oder gegebenenfalls auch anstelle der, isolierenden Lagerung des Fusses 2a, eine Isolierung mit mindestens einem erfindungsgemässen Isolierelement im Bodenbereich vorgesehen werden kann. Um auch im Bodenbereich eine effiziente Reflexionsfläche bereitzustellen, ist unter der Schaumstoffschicht 14 gegebenenfalls eine Platte in der Form von festem Schichtmaterial 9 angeordnet.

Die mindestens zwei Isolierelemente 3 sind mit ihren unteren Stirnseiten auf der Schaumstoffschicht 14 stehend zu einem geschlossenen Mantel zusammengestellt. Dieser Mantel ist an der oberen Stirnseite mit mindestens einem weiteren ring- bzw. teilringförmigen Isolierelement 3a verbunden, wobei eine darin ausgebildete Kontrollöffnung 15 mit einem Deckel 16 verschliessbar ist. Der Deckel 16 umfasst vorzugsweise zwei, gegebenenfalls aber auch mehr als zwei, beabstandet angeordnete transparente Platten 17, zwischen denen entlang der Aussenberandung ein elastischer Schaumstoffring 18 angeordnet ist. Um dem Deckel 16 einen Auflagerand und eine Einsetzöffnung bereitzustellen, ist über dem festen Flachmaterial 9 des teilringförmigen Isolierelementes 3a eine weitere Isoliermaterial-Schicht 7 angeordnet, die an die Aussenberandung des Deckels 16 angepasst ist. Das darunterliegende feste Flachmaterial 9 erstreckt sich unter den Deckelrand. Im dargestellten Beispiel hat dieses feste Flachmaterial 9 lediglich zwei Schichten, eine metallische 9a und eine aus gummiähnlichem Material 9b. Es versteht sich von selbst, dass der Deckel 16 auch mit dem Rand einer etwas grösseren oberen Platte 17 auf dem Isolierelement 3a aufliegen könnte und dieses Isolierelement 3a dann keine abgestufte Berandung der Öffnung 15 benötigt.

Wenn, wie beim Isolierelement 3a, auf der Aussenseite des festen Flachmaterials 9 nochmals eine Schicht aus Isoliermaterial 7 angeordnet ist, so wird dadurch der durch das feste Flachmaterial durchtretende Schallanteil vor dem Austritt aus dem Isolierelement 3a nochmals gedämpft, was zuweilen zweckmässig ist. Die Dämpfungsmembran 4 des Isolierelementes 3a erstreckt sich vorzugsweise nur bis zu den Dämpfungsmembranen 4 der darunter anschliessenden Isolierelemente 3. Gegebenenfalls erstreckt sie sich aber über den Kontaktbereich der Isolierelemente 3 und 3a bis zur Berandung des Isolierelementes 3a.

Weil die Kontrollöffnung sowohl zum Nachfüllen von Stückgut als auch zur optischen Überwachung eingesetzt wird, könnten zwei Öffnungen vorgesehen werden, von denen jede nur eine dieser Funktionen zulässt. Dabei würde die Nachfüllöffnung vorzugsweise mit einem erfindungsgemässen Isolierelement verschlossen, was im Vergleich zur Lösung mit dem dargestellten transparenten Deckel 16 einen deutlich reduzierten Schallaustritt gewährleistet. Die Überwachungsöffnung könnte deutlich kleiner ausgebildet und vorzugsweise mit einer fest eingesetzten Optik versehen werden, so dass von Auge, oder aber auch mit einer optischen Erfassungsvorrichtung ein guter Einblick in den Innenraum der Isolierung gewährleistet ist.

Bei Rüttlern 2 muss das Stückgut durch eine Austrittsöffnung 19 im Mantelbereich der Isolierung zu einer Weiterbearbeitungsstation gelangen können. Um die Isolierelemente 3 im Mantelbereich der Isolierung einfach montieren und entfernen zu können, wird die Austrittsöffnung 19 vorzugsweise im Kontaktbereich zweier miteinander verbindbarer Isolierelemente 3 angeordnet. Auf dem Austrittsweg wird das Stückgut in mindestens einem Weiterführungskanal 20 geführt. Um den Schallaustritt durch die Austrittsöffnung 19 möglichst stark zu reduzieren, wird die Isolierung um den Weiterführungskanal 20 entlang dessen Achse etwas fortgesetzt. Dabei wird etwa ein rohrförmiges Isolierelement 3b oder gegebenenfalls werden mindestens zwei teilrohrförmige Isolierelemente 3b an der Aussenberandung der Isolierungs-Mantelwand um die Austrittsöffnung 19 anliegend mittels Klettverschlüsse 21 befestigt. Um zu verhindern, dass die um den Weiterführungkanal 19 angeordneten Isolierelemente 3b mit diesem in Kontakt gelangen, werden die Isolierelemente 3b gegebenenfalls im Bereich des freien Endes abgestützt. Durch diese rohrförmig weiterführende Isolierung wird der vom Innenraum der Isolierung her offene Raumbereich sehr klein. Gegebenenfalls ist die Form des Weiterführungskanales 19 und der Isolierelemente 3b so gewählt, dass kein Schall ohne Reflektionen und der damit einhergehenden Dämpfung durch die Isolierelemente 3b nach aussen gelangt.

Die optimale Isolierlänge der um den Weiterführungskanal angeordneten Isolierelemente 3b hängt insbesondere auch vom dominanten zu dämpfenden Schallanteil, bzw. dessen Frequenz oder Wellenlänge ab. Beim Tieftonanteil der Rüttler, die mit einer Netzfrequenz von 50Hz elektrisch gespiesen sind, herrscht der Frequenzanteil im Bereich von 100Hz vor. Die entsprechend dominante Wellenlänge liegt somit im Bereich von 3m. Wenn nun davon ausgegangen wird, dass ein Knotenbereich dieser Schwingung in der Ebene des Flachmaterials 9 um die Austrittsöffnung 19 liegt, so wäre es besonders vorteilhaft eine Isolierlänge von einer halben Wellenlänge also von im wesentlichen 1.5m vorzusehen. Dadurch wäre am Austrittsende der Isolierung ein Knotenbereich mit verschwindenden Amplituden. Wenn die Austritts-Isolierung zudem im Bereich einer Viertelwellenlänge, also in ihrem Mittelbereich, einen erhöhten Querschnitt hat, so ergibt sich eine λ/4-Dichtung. Analoge λ/4-Dichtungen werden zum Beschränken der Abstrahlung von elektromagnetischen Wellen aus Mikrowellenöfen eingesetzt. Weil nun aber eine Länge von 1.5m für die Austritts-Isolierung meist zu lang ist, wird die Länge vorzugsweise bei einem Achtel der Wellenlänge also bei im wesentlichen ca. 38cm festgelegt. Es hat sich gezeigt, dass dadurch Schall-Austritts-Dämpfungen erzielt werden können, die mit jenen der λ/4-Dichtungen vergleichbar sind.

Bei der erfingungsgemässen Lösung kann auf metallische Flansche bzw. auf Schallbrücken im Verbindungsbereich zwischen aneinander anschliessenden Isolierelementen verzichtet werden. Versuche haben gezeigt, dass bei einem mit Stückgut gefüllten Rüttler ein Schalldruckpegel von ca. 102dB auftritt. Mit der Isolierung gemäss dem Stande der Technik liegt der Schalldruckpegel immer noch über 85dB. Eine erfindungsgemässe Isolierung konnte aber den Schalldruck auf 66dB reduzieren.

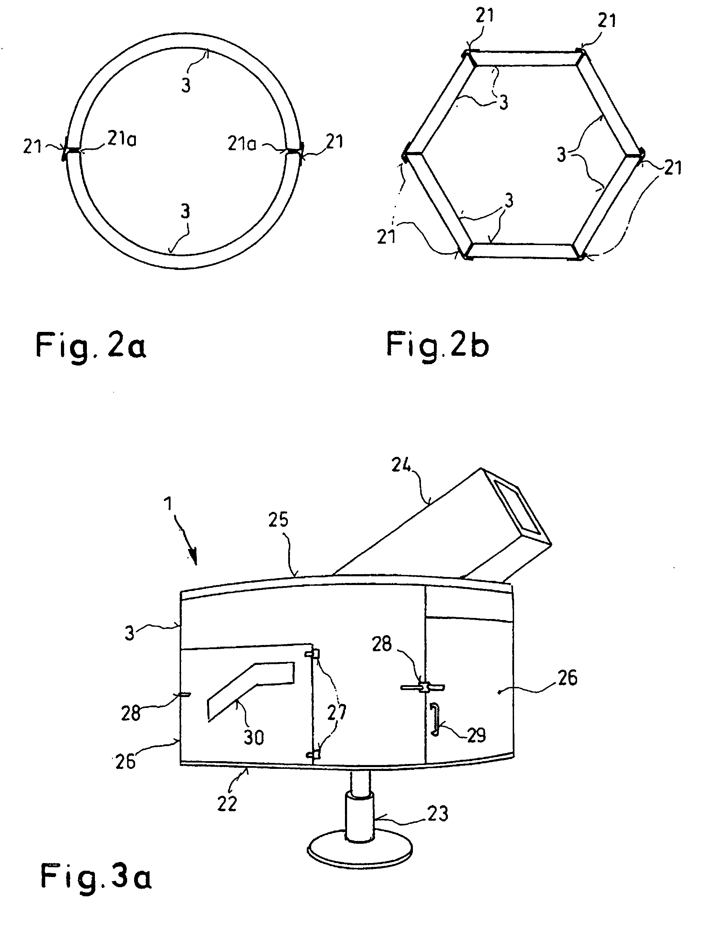

Fig. 2a zeigt einen Isoliermantel, der aus zwei halbzylinderförmigen Isolierelementen 3 zusammengestellt ist. Die Isolierelemente 3 sind über Klettverbindungen 21 an der Mantelaussenfläche und gegebenenfalls über Klettverbindungen 21a an den kontaktierenden Stirnseiten miteinander verbunden. Die Isolierelemente 3 können entsprechend der Fig. 1 vom zu isolierenden Gerät beabstandet sein. Die Fig. 2a soll auch zur Veranschaulichung einer Isolierung, die direkt am Bauteil anliegend montiert wird, verwendet werden. Die dargestellte Isolierung passt somit an ein Rohr dessen Aussendurchmesser dem Innendurchmesser der Isolierung entspricht.

Fig. 2b zeigt einen aus sechs ebenen Isolierelementen 3 zusammengestellten geschlossenen Mantel. Zur Verbindung sind wiederum Klettverbindungen 21 vorgesehen.

Fig. 3a zeigt eine Schallisolierung für einen Rüttler, der auf einem höhenverstellbaren Teller 22 mit einem Ständer 23 angeordnet ist. Die Höhenverstellbarkeit ermöglicht eine präzise Zuordnung des Rüttler-Ausgabekanals an die anschliessende Bearbeitungsstation. Die vom Rüttler zu vereinzelnden Teile werden von oben über einen Zuführkanal in den Rüttler geführt. Um das Abstrahlen von Schall im Bereich des Zuführkanales zu minimieren, wird um den Zuführkanal eine Zuführkanal-Isolierung 24 vorgesehen, deren Länge im wesentlichen nach den gleichen Kriterien gewählt ist, wie die anhand der Fig. 1 beschriebene Isolierlänge beim Weiterführungskanal. Die Zuführkanal-Isolierung steht vom oberen Isolierabschluss 25 nach oben vor. Unter dem Isolierabschluss 25 sind Isolierelemente 3 mantelförmig angeordnet. Weil zwei Bereiche des Rüttlers durch die Schallisolierung 1 einfach zugänglich sein müssen, wurden zwei türförmige Isolierelemente 26 mit Scharnieren 27 am angrenzenden Isolierelement 3 befestigt. Die Scharniere werden dabei vorzugsweise je am festen Flachmaterial befestigt. Um die türförmigen Isolierelemente 26 verschliessen und öffnen zu können, sind Verschlüsse 28 und gegebenenfalls Griffe 29 vorgesehen. Beim türförmigen Isolierelement 26 im Bereich des Rüttler-Ausgabekanals ist eine optische Überwachung durch das geschlossenen Isolierelement 26 erwünscht. Dazu ist in diesem Isolierelement 26 ein Sichtbereich 30 mit zwei voneinander beabstandeten Plexiglaslagen ausgebildet.

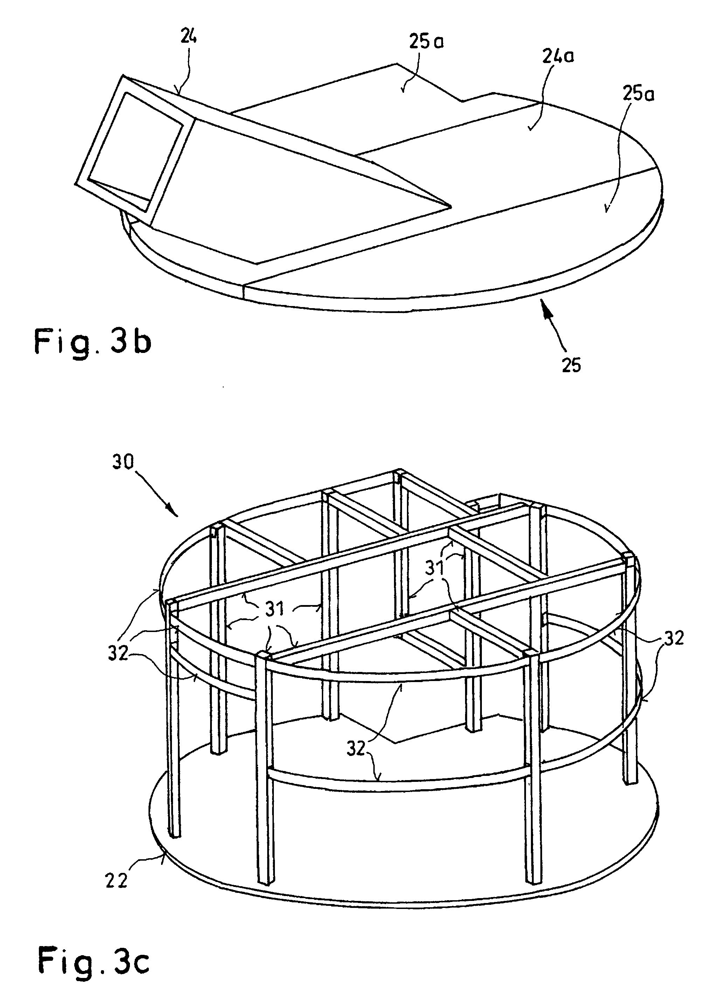

Gemäss Fig. 3b ist der obere Isolierabschluss 25 im wesentlichen dreiteilig ausgebildet. Im mittleren Bereich ist die Zuführkanal-Isolierung 24 mit einem ebenen Abschlussbereich 24a und beidseits davon sind Abschluss-lsolierelemente 25a angeordnet, die gegebenenfalls mit Scharnieren befestigt sind.

Gemäss Fig. 3c werden die Isolierelemente 3, 24 und 25 von einem Haltegestell 30 gehalten, was eine Schallisolierung mit hoher Stabilität ermöglicht. Das Haltegestell 30 umfasst Profilelemente 31 und Bandelemente 32. Die Profilelemente 31 sind zu einem Gerippe verbunden, das am Teller 22 befestigt ist. Um die Körperschall-Übertragung vom Haltegestell 30 auf den Teller 22 zu minimieren können die an den Teller 22 anschliessenden Profilelemente 31 über elastische Verbindungselemente und insbesondere mit Kunststoffschrauben am Teller 22 befestigt werden. Die Bandelemente 32 sind an Profilelementen 31 befestigt und erlauben es, die gewünschten Krümmungen einfach bereitzustellen. Bei der Befestigung der Isolierelemente 3, 24 und 25 muss wiederum darauf geachtet werden, dass keine unnötig starken Schallbrücken vom Haltegestell 30 zum festen Flachmaterial der Isolierelemente 3, 24 und 25 entstehen. Daher erfolgt die Befestigung über elastische Verbindungselemente, die zwischen dem Haltegestell 30 und dem festen Flachmaterial, vorzugsweise mit Kunststoffschrauben festgeschraubt sind. Gegebenenfalls werden die Isolierelemente 3, 24 und 25 mit Spannbändern von aussen gegen das Haltegestell 30 gespannt. Bei Isolierelementen, die einfach entfernbar sein müssen, können auch zusammenwirkende Klettbänder am Haltegestell 30 und entsprechend am Isolierelement 3 angeordnet werden. Um den Schallaustritt durch den Teller 22 so klein wie möglich zu halten, werden vorzugsweise auch auf dem Teller 22 Isolierelemente 3 angeordnet, wobei der Rüttler vorzugsweise auf elastischen Auflagen steht, welche in Ausnehmungen dieser Isolierelemente angeordnet sind.

Um die Wirksamkeit der Schallisolierung gemäss Fig.3a zu ermitteln, wurden Schallmessungen durchgeführt. Dabei wurde der äquivalente Schalldruckpegel im Frequenzbereich von 50 bis 10'000 Hz für den Rüttler ohne und mit Schallisolierung gemessen. Die Terz-Frequenzband Messwerte zeigen, dass die Schallisolierung im gesamten Frequenzbereich eine Reduktion des äquivalenten Schalldruckpegels um mindestens 10 dB(A) erzielbar macht. Der über den Frequenzbereich summierte Schalldruckpegel lag ohne Isolierung bei 96.3 dB(A) und mit Isolierung bei 73.6 dB(A), was einer Reduktion von mehr als 20 dB(A) entspricht. Der mit der Isolierung erzielte Schalldruckpegel liegt unter dem aus gesundheitlichen Gründen für industrielle und gewerbliche Tätigkeiten zulässigen Wert von 75 dB(A) (CH:SUVA-Norm). Bei einem erzielten Dauerschalldruckpegel von 73.6 dB(A) ist eine Unterhaltung mit normaler Lautstärke möglich und man benötigt keinen Gehörschutz. Ohne Schallisolierung wäre das Tragen eines Gehörschutzes vorgeschrieben.

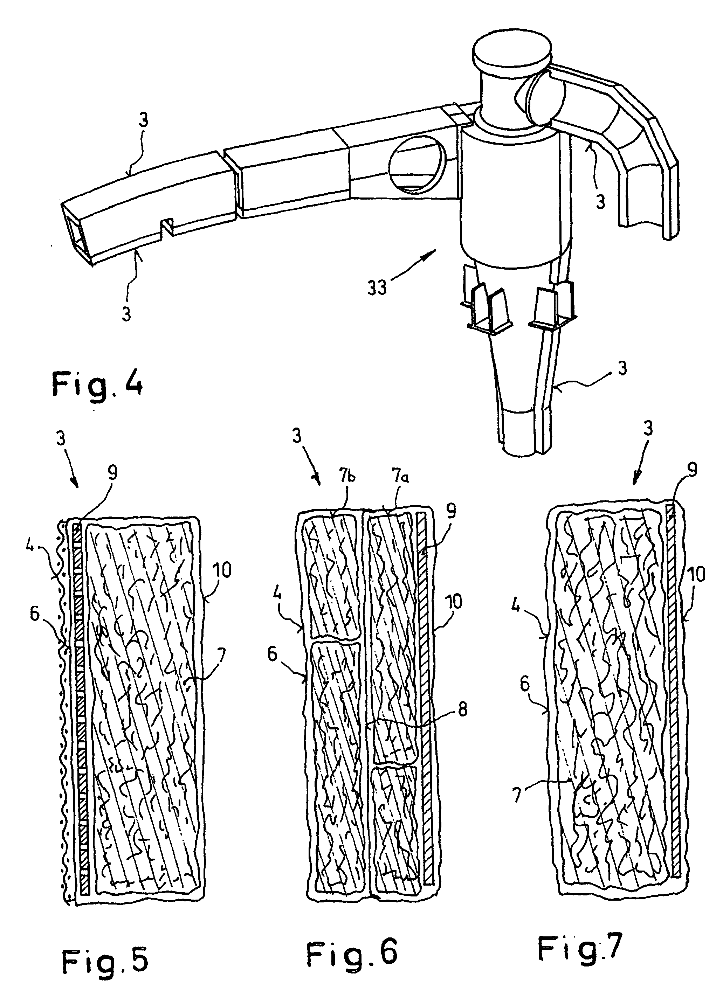

Fig. 4 zeigt einen Zyklon 33, der zum Ausscheiden von Partikeln aus der Prozessluft beispielsweise einer Holzbearbeitungsanlage eingesetzt wird. Es hat sich gezeigt, dass der Zyklon 33 im Betriebszustand aufgrund der darin entstehenden Luftströmung einen grossen Lärm erzeugt. Mit einer erfindungsgemässen Schallisolierung des Zyklons 33 mitsamt der Zu- und Ableitung kann der Schalldruckpegel wesentlich reduziert werden. Die Isolierelemente 3 liegen direkt an der Aussenfläche des Zyklons 33 und der Zuund Ableitung an. Es hat sich gezeigt, dass die Befestigung der Isolierelemente einfacher ist, wenn das feste Flachmaterial im Bereich der Innenberandung und nicht im Bereich der Aussenberandung angeordnet ist. Aufgrund der Anordnung des festen Flachmaterials im Bereich der Innenberandung liegen die schweren Komponenten der Schallisolierung im wesentlichen an den die Isolierung tragenden Aussenflächen des Anlageteiles an und nur das leichte Isoliermaterial steht nach aussen vom Anlageteil vor. Bei der Anordnung des festen Flachmaterials im Bereich der Aussenberandung würde zumindest das vertikal über dem Anlageteil liegende Isoliermaterial vom festen Flachmaterial komprimiert und dadurch weniger schalldämmwirksam. Zudem wären das feste Flachmaterial aneinander angrenzender Isolierelemente nicht auf dem gleichen Abstand zur Aussenfläche des Anlageteiles.

Fig. 5 zeigt ein Isolierelement 3, bei dem das feste Flachmaterial 9 im Bereich der Innenberandung angeordnet ist. Damit der Schallanteil der im Isoliermaterial 7 absorbiert werden soll, in dieses eintreten kann, ist das feste Flachmaterial 9 als Lochblech ausgebildet. Genügende Schalldämmwerte ergeben sich mit Lochblechen, die einen Lochanteil an der Gesamtfläche von ca. 30% haben und deren Lochdurchmesser im Bereich von 1 - 5mm, vorzugsweise bei im wesentlichen 3mm, liegen. Bei einem Lochblech mit einem Lochanteil von 30% ist somit noch 70% der Fläche des festen Flachmaterials als Reflexionsfläche wirksam. Die Membranwirkung der Dämpfungsmembran 4 ist durch das nahe liegende Lochblech nicht merkbar verändert. Um das Lochblech etwas von der Dämpfungsmembran 4 beabstandet zu halten, ist es gegebenenfalls zweckmässig eine dünne Schicht des Isoliermaterials dazwischen anzuordnen. Das Isolierelement 3 umfasst vorzugsweise mindestens eine Hüllen-Aussenlage 10 im Bereich der Aussenberandung und gegebenenfalls eine Hüllen-Innenlage 5 zwischen dem Isoliermaterial 7 und der Dämpfungsmembran 4. Die Dämpfungsmembran 4 wird gegebenenfalls von der Hüllen-Innenlage gebildet oder ist an der Hüllen-Innenlage 5 befestigt. Das Material der Hüllenlagen ist vorzugsweise ein Glasfasergewebe, wobei die Aussenlage etwa mit Silikon beschichtet ist und die Innenlage vorzugsweise mit Draht, insbesondere V4A-Draht, durchwoben ist. Ein besonders geeignetes textiles Material für die Hüllen-Innenlage und insbesondere auch für die Dämpfungsmembran ist ein Glasfaser-Draht-Gewebe mit der Bezeichnung Inconel, welches ein Gewicht von im wesentlichen 1.2Kg/m² hat.

Fig. 6 zeigt ein Isolierelement 3, bei dem das feste Flachmaterial 9 als Platte mit einer Dicke von im wesentlichen 2mm im Bereich der Aussenberandung angeordnet ist und bei dem zwischen zwei Isoliermaterial-Schichten 7a und 7b mit Dicken von 13mm eine Hüllen-Zwischenlage 8 angeordnet ist. Die Teile der Isoliermaterial-Schichten 7a und 7b sind vorzugsweise mit versetzten Berandungen angeordnet, so dass sich keine durchgehenden Spalte von der Hüllen-Innenlage 6 zur Hüllen-Aussenlage 10 bzw. zum festen Flachmaterial 9 erstrecken können. Es versteht sich von selbst, dass anstelle oder zusammen mit der Hüllen-Zwischenlage 8 auch festes Flachmaterial 9 in der Form eines Bleches oder eines Lochbleches zwischen den beiden Isoliermaterial-Schichten 7a und 7b eingesetzt werden kann. Bei besonders hohen Schalldruckpegeln können auch mehr als zwei Isoliermaterial-Schichten und dazwischen Zwischenlagen vorgesehen werden. Insbesondere kann bei einem dominanten Spektralbereich auch eine Resonator-Anordnung mit einem inneren Lochblech und einem äusseren Reflektionsblech durch die richtige Wahl, des Abstandes zwischen den Blechen und die optimierte Lochausbildung so bereitgestellt werden, dass der dominante Spektralbereich stark gedämpft wird.

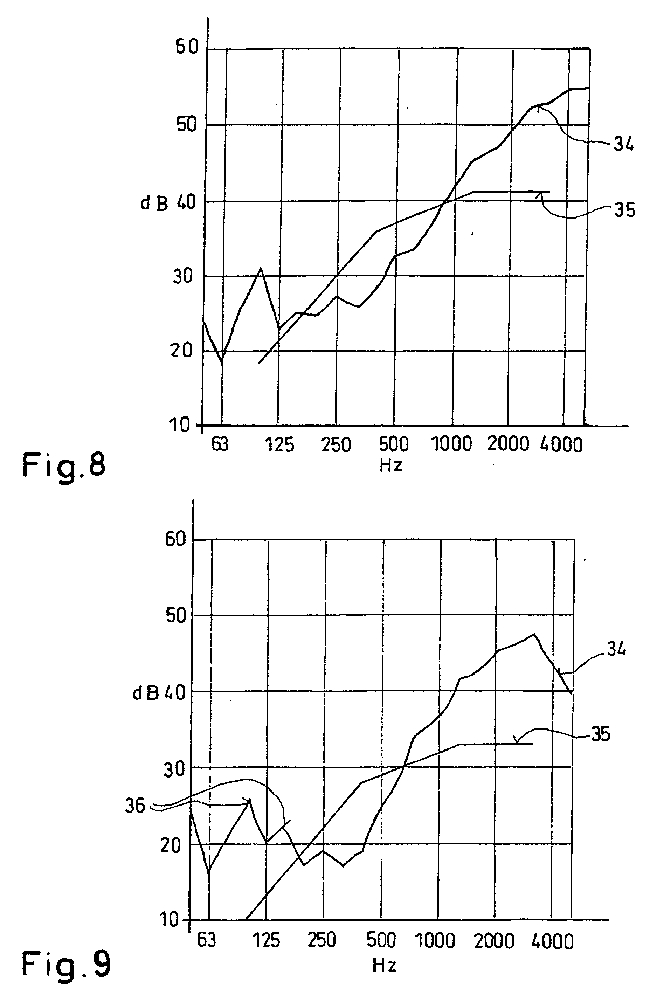

Fig. 7 zeigt ein Isolierelement 3, bei dem das feste Flachmaterial 9 als Platte mit einer Dicke von im wesentlichen 1mm im Bereich der Aussenberandung angeordnet ist. Das Isolierelement 3 umfasst lediglich eine Isoliermaterial-Schicht 7 mit einer Dicke von 25mm. Die Hülle umfasst eine Hüllen-Innenlage 6 aus einem Glasfasergewebe mit eingewobenen Drähten und eine Hüllen-Aussenlage 10 aus mit Silikon beschichtetem Glasfasergewebe. Die Dämpfungsmembran 4 wird von der Hüllen-Innenlage 6 gebildet und besteht somit aus Glasfasergewebe mit eingewobenen Drähten.

Um den Schalldämmeffekt einzelner Komponenten der Isolierelemente empirisch zu erfassen, wurden 12 verschiedene Musterelemente hergestellt. Jedes Musterelement wurde in eine Türöffnung zwischen zwei Räumen eingesetzt, um das Schalldämm-Mass nach ISO 140-3.1995 zu bestimmen. Dabei ist im ersten Raum eine Schallquelle und im zweiten Raum ein Mikrofon angeordnet. Der entsprechende R-Wert wurde in Terzbändem mit den Frequenzen 50, 63, 80, 100, 125, 160, 200, 250, 315, 400, 500, 630, 800, 1000, 1250, 1600, 2000, 2500, 3150, 4000 und 5000 Hz bestimmt. Der ermittelte Wert ist ein Mass für den Schaldruckpegel-Unterschied im zweiten Raum bei eingesetztem bzw. weggelassenem Musterelement. Eine gute Schallisolierung eines Frequenzbereiches zeigt in den Terzbändern dieses Frequenzbereiches hohe R-Werte in dB. Ein vielseitig einsetzbares Isolierelement sollte somit R-Werte haben, die in allen Terzbändern über einem gewünschten Minimalwert liegen. Falls die Schallquelle, die gedämpft werden sollte, vorallem störende hoch- bzw. tieffrequente Schallanteile abstrahlt, genügen Isolierelemente, die entsprechend eine gute Schalldämmung im hoch- bzw. tieffrequenten Bereich erzielen.

Die Parameter, in denen sich die Muster unterscheiden, betreffen die Dämpfungsmembran, die Hülle und das feste Flachmaterial. Als Isoliermaterial wurden immer Silikatfasermatten mit einem Gewicht von 128 kg/m³ eingesetzt. Die gesamte Mächtigkeit des Isoliermaterials lag bei 25mm. Alle Musterelemente sind rechteckig mit einer Länge von 1.4m und einer Breite von 1m. Bei der Hülle wurde die Hüllen-Innenlage weggelassen oder in der Form eines Glasfasergewebes mit Metalldrähten und einem Gewicht von im wesentlichen 1.2Kg/m² eingesetzt. Bei einzelnen Mustern übernimmt die Hüllen-Innenlage die Funktion der Dämpfungsmembran. Die Hüllen-Aussenlage wurde in der Form eines Glasfasergewebes mit Silikonbeschichtung oder mit Metalldrähten eingesetzt. Es wurden auch Muster getestet, bei denen die Hüllen-Aussenlage in der Form eines Drahtgewebes ausgebildet ist. Um den Einfluss der Dämpfungsmembran zu erfassen wurden Muster bereitgestellt, bei denen die Dämpfungsmembrane als grobes oder feines Drahtgewebe oder aber als Glasfasergewebe mit Metalldrähten ausgebildet ist.

Beim groben Drahtgewebe handelt es sich um ein Gewebe mit 130 Maschen/cm² (mesh/cm²) und einer offenen Fläche von ca. 51%. Das Gewicht dieses Drahtgewebes beträgt ca. 0.910kg/m² bei einem Drahtdurchmesser von ca. 0.25mm. Beim feinen Drahtgewebe handelt es sich um ein Mikrofilter-Metallgewebe. Mikrofilter-Metallgewebe haben sehr hohe Maschenzahlen, gegebenenfalls spezielle Webstrukturen und werden aus Drähten mit kleinem Querschnitt gebildet. Entsprechend sind Filterfeinheiten von wenigen Mikrons - beispielsweise von 20µ - und kleine Luftdurchtrittsquerschnitte, bzw. Luftdurchlässigkeitswerte erzielbar. Das verwendete Mikrofilter-Metallgewebe mit einem Kettdrahtdurchmesser von 0.042mm und einem Schussdrahtdurchmesser von 0.125mm hat eine Maschenzahl von 600x125 pro cm². Dieses Filtergewebe hat ein Gewicht von ca. 0.850kg/ m², was im wesentlichen mit dem Gewicht des groben Drahtgewebes übereinstimmt. Das feste Flachmaterial wurde eingesetzt oder weggelassen und war als 1mm bzw. 2mm dickes Blech oder Lochblech ausgebildet.

Die Messresultate der Schalldämm-Messung werden anhand von zwei Messkurven erläutert. Fig. 8 zeigt die Dämmwerte eines Musters mit besonders hoher Schalldämmung. Das Muster entspricht im wesentlichen dem Musterelement gemäss Fig. 6, wobei an der Hüllen-Innenlage zusätzlich ein grobes Drahtgewebe befestigt war. Aufgrund der Analyse aller Messungen kann angenommen werden, dass das grobe Drahtgewebe die Schalldämmung nur unwesentlich beeinflusst. Um die Messkurve 34 mit einem Wert zu charakterisieren wurde die Bezugskurve 35 nach ISO 717 und deren R_{w}-Wert bei 500Hz mit 37dB bestimmt. Es ist ein Vorteil der erfindungsgemässen Isolierelemente, dass mit einem lediglich 33mm dicken Isolierelement ein R_{w}-Wert von 37dB erzielt werden kann.

Fig. 9 zeigt die Dämmwerte eines Musterelementes gemäss Fig. 7, wobei an der Hüllen-Innenlage zusätzlich ein grobes Drahtgeflecht, das aber für die Schalldämmung unbedeutend ist, befestigt war. Der R_{w}-Wert liegt bei 29dB. Der Anstieg der Dämmwerte im Bereich von 500 bis 1600Hz stammt im wesentlichen von der Kissenanordnung mit dem Isoliermaterial 7 zwischen dem festen und luftdichten Flachmaterial 9 und der Hüllen-Innenlage 6, bzw. der Dämpfungsmembran 4. Die Peaks 36 liegen im Bereich der Terzbänder 80 und 100Hz bzw. 160Hz und geben einen Hinweis auf Resonanzen. Weil diese Peaks im wesentlichen bei allen Musterelementen auftreten, könnte es sich um Resonanzen handeln, die sich aufgrund der Abmessung der Muster ergeben. Beispielsweise könnte es sich um Eigenschwingungen der Dämpfungsmembran 4 handeln. Im Frequenzbereich von 200-400Hz sind die Dämmwerte tief. Aus dem Vergleich mit der Fig. 8 kann abgeleitet werden, dass die Zwischenlage 8 aus Glasfasergewebe die Dämmwerte im Bereich von 250-1000Hz erhöht. Die Werte der Fig. 9 liegen auch tiefer als jene der Fig. 8, weil das Muster gemäss Fig. 7 ein festes Flachmaterial mit der Dicke von lediglich 1mm und nicht 2mm, wie das Muster gemäss Fig. 7, aufweist.

Ein Vergleich der Messdaten von Mustern mit und ohne festes Flachmaterial zeigt, dass ein Blech im Bereich der Aussenberandung zu einer Erhöhung der Dämmwerte im gesamten Frequenzbereich führt. Diese Erhöhung dürfte im Bereich von 125 bis 500Hz etwas höher sein als ausserhalb dieses Bereiches. Bereits mit einem Blech von 2mm Dicke sind gute Werte möglich. Bei Blechdicken über 6mm besteht die Gefahr, dass die Dämmwerte wieder schlechter werden, so dass die bevorzugte Dicke somit im Bereich von 2 bis 6mm liegt. Die Silikon-Beschichtung der Hüllen-Aussenlage scheint im Frequenzbereich von 250 bis 2000Hz zu einer leichten Erhöhung der Dämmwerte zu führen. Bei den Drahtgittern scheint lediglich das feine Gewebe eine Erhöhung der Dämmwerte im Bereich von 1600 bis 3000Hz zu bewirken. Ein Dämmeffekt des groben Drahtgewebes konnte mit den Messungen nicht explizit gefunden werden. Weil aber bei einer Isolierung gemäss Fig. 1 auch das grobe Drahtgitter in Vibration versetzt wird, dürfte auch davon eine Dämmwirkung ausgehen. Die erfindungsgemässen Isolierelemente zeigen, dass die Dämmwirkung nicht alleine von deren Masse, sondern auch wesentlich von deren Aufbau und den verwendeten Materialien abhängt. Zu einem zweckmässigen Aufbau gehört mindestens eine luftdichte Schicht, die vorzugsweise durch das feste Flachmaterial gegeben ist. Gegebenenfalls wird mit einer Silikon beschichteten Hüllenlage eine weitere dichte Schicht vorgesehen.

Die Schalldämmmessungen erfolgen definitionsgemäss lediglich an flachen Musterelementen. Die erfindungsgemässe Schallisolierung wird aber um ein schallerzeugendes Gerät herum angeordnet. Der Schallaustritt aus einer solchen Schallisolierung hängt nun nicht nur von der Schalldämmung der Isolierelemente ab, sondern auch von der Schallabsorption im Innenraum der Schallisolierung. Die Absorptionseigenschaft der Musterelemente wurde in einer Alpha-Kabine gemessen. Dabei hat sich gezeigt, dass es im wesentlichen nur zwei charakteristisch verschiedene Frequenzverläufe der Absorptionskoeffizienten gibt. Alle Musterelemente mit einer Hüllen-Innenlage aus Glasfasergewebe haben Absorptionskoeffizienten, die von tiefen Frequenzen gegen hohe Frequenzen kleiner werden, bzw. im Bereich unter 500Hz gross sind. Alle Musterelemente ohne Hüllen-Innenlage aus Glasfasergewebe, also lediglich mit einem Drahtgewebe zwischen dem Innenraum und dem Isoliermaterial, haben Absorptionskoeffizienten, die von tiefen Frequenzen gegen 500Hz stark ansteigen, zwischen 500 und 2000Hz maximal sind und im Bereich von 2000 bis 5000 Hz im wesentlichen beim Wert bleiben der auch bei 500Hz auftritt.

Dies rührt vermutlich davon her, dass die Drahtgewebe den Schalleintritt ins Isoliermaterial für Frequenzen über 500Hz nicht wesentlich beeinträchtigen und die Absorption im langfasrigen Silikatfaser-Isoliermaterial für Frequenzen über 500Hz sehr gross ist, weil im Isoliermaterial lange Luftkanäle mit kleinen Querschnitten ausgebildet sind, in denen die schallbedingten Luftbewegungen in Turbulenz umgesetzt werden. Bei Hüllen-Innenlagen mit Glasfaserstoff hingegen, scheint der Schallanteil mit Frequenzen über 500Hz nicht gut durch den Glasfaserstoff in das Isoliermaterial eintreten zu können und entsprechend kann das Isoliermaterial nur wenig Schall absorbieren. Bei Frequenzen unter 500Hz absorbiert das in Schwingung versetzte Glasfasergewebe Schallenergie, was aus der Zunahme des Absorptionskoeffizienten mit abnehmender Frequenz hervorgeht. Das verwendete Glasfasergewebe mit dem eingewobenen Metalldraht ist nicht luftdicht, sondern hat eine genügend kleine Luftdurchlässigkeit. Trotz der höheren Luftdurchlässigkeit der Drahtgewebe liegen die Absorptionswerte von Mustern mit lediglich einem Drahtgewebe als Innenberandung bei ca. 400Hz nur wenig unter den entsprechenden Werten der Muster mit Glasfasergeweben als Innenberandung. Das heisst, dass auch die mitschwingenden Drahtgewebe in diesem Frequenzbereich Schall absorbieren.

Diese von der Schallabsorption ausgehende Überlegung erklärt die Schalldämmmessung an zwei Musterelementen, die lediglich eine Hülle aus grobem bzw. feinem Drahtgewebe und darin Isoliermaterial umfassen. Diese Musterlemente haben keine dichte Hüllen- oder Flachmaterialschicht. Das heisst die Luftkanäle im Isoliermaterial sind auf beide Seiten des Isolierelementes hin offen. Bei der Absorptionsmessung treten für Frequenzen von 500 bis 5000Hz grosse Werte auf. Bei der Schalldämmmessung hingegen steigen die Dämmwerte im Bereich von 500 bis 5000Hz nur wenig an und liegen deutlich tiefer als die Dämmwerte der Musterelemente mit mindestens einer im wesentlichen luftdichten Schicht. Zudem liegen die Dämmwerte des Musters mit dem feinen Drahtgewebe, das eine kleinere Luftdurchlässigkeit hat, mit zunehmender Frequenz zunehmend über den entsprechenden Dämmwerten des Musters mit dem groben Drahtgewebe.

Weil die Wirkung der erfindungsgemässen Schallisolierungen sowohl von der Schalldämmung der Isolierelemente als auch von der Schallabsorption im Innenraum der Schallisolierung abhängt, sind insbesondere Isolierelemente vorteilhaft, die für Frequenzen über 500Hz sowohl hohe Dämmwerte als auch hohe Absorptionskoeffizienten gewährleisten. Diese Isolierelemente sollten vorzugsweise eine Hüllen-Zwischenlage mit hoher Luftdichtigkeit und eine luftdurchlässige Hüllen-Innenlage, insbesondere aus Drahtgewebe, haben. Dabei wirkt die Isoliermaterial-Schicht zwischen der Hüllen-Innenlage und der Hüllen-Zwischenlage als Absorptionsschicht und die Isoliermaterial-Schicht zwischen der Zwischenlage und der Hüllen-Aussenlage als Dämmschicht. Ein solches Musterelement wurde mit einer Hülle aus feinem Drahtgewebe und einer Zwischenlage aus Glasfasergewebe, sowie mit einem der Aussenseite zugewandten Stahlblech von 2mm Dicke hergestellt. Die gemessenen Dämmwerte dieses Musters entsprechen im wesentlichen den Werten gemäss Fig. 8, wobei die Werte im Bereich von 250 bis 1000Hz um 2 bis 4dB unter und im Bereich von 1250 bis 5000Hz um 2 bis 4dB über den Werten der Fig. 8 liegen.

## Patentansprüche

1. Schallisolierung zum Isolieren von schallerzeugenden Geräten oder Anlageteilen, insbesondere von Vibrationszuführgeräten bzw. Rüttlem, mit miteinander verbindbaren Isolierelementen (3, 3a, 3b), die gegen die Schallquelle hin durch eine Innenberandung und von dieser weg durch eine Aussenberandung berandet sind und eine textile Hülle mit einer Hüllen-Innenlage im Bereich der Innenberandung und einer Hüllen-Aussenlage im Bereich der Aussenberandung sowie in der Hülle angeordnetes Isoliermaterial (7) mit einem Hohlraumänteil umfassen, wobei die Hüllen-Innenlage eine Dämpfungsmembran (4) aus textilem Material bildet, **dadurch gekennzeichnet, dass** in der Hülle festes Flachmaterial (9) angeordnet ist, das in der Form einer festen Fläche die Formstabilität des jeweiligen Isolierelementes gewährleistet und eine Schall-Reflektionsfläche bildet.

2. Schallisolierung nach Anspruch 1, **dadurch gekennzeichnet, dass** das textile Material der Dämpfungsmembran (4) ein Gewebe, ein Geflecht, Maschenware, ein Netz oder gegebenenfalls ein Gitter ist und dabei vorzugsweise Draht umfasst.

3. Schallisolierung nach Anspruch 1 oder 2, **dadurch gekennzeichnet, dass** das textile Material der Dämpfungsmembran (4) ein Glasfasergewebe, vorzugsweise mit eingewobenem Draht, umfasst.

4. Schallisolierung nach einem der Ansprüche 1 bis 3, **dadurch gekennzeichnet, dass** das textile Material der Dämpfungsmembran (4) ein Drahtgewebe umfasst, das. vorzugsweise als Mikrofiltergewebe ausgebildet ist und dabei, insbesondere Drahtdurchmesser im Bereich von 0.02mm bis 0.4 und Maschenzahlen in einer Richtung insbesondere im Bereich von 80 bis 1000 1/cm, vorzugsweise einen Kettdrahtdurchmesser von 0.042mm und einen Schussdrahtdurchmesser von 0.125mm, eine Maschenzahl von 600x125 pro cm² und ein Gewicht von ca. 0.850kg/ m² aufweist.

5. Schallisolierung nach einem der Ansprüche 1 bis 4, **dadurch gekennzeichnet, dass** das Isoliermaterial (7) aus langfaserigem Schichtmaterial, vorzugsweise aus Silikatfasermatten, besteht und dabei zusammenhängende Luftkanalsysteme zur Hochtonabsorption aufweist.

6. Schallisolierung nach einem der Ansprüche 1 bis 5, **dadurch gekennzeichnet, dass** das festes Flachmaterial (9) zumindest eine Metallschicht umfasst, deren Mächtigkeit mindestens 1.5mm, vorzugsweise im wesentlichen 2mm, insbesondere weniger als 6mm beträgt, wobei das feste Flachmaterial (9) gegebenenfalls noch mindestens eine Schicht aus Gummi bzw. gummiähnlichem Material umfasst.

7. Schallisolierung nach einem der Ansprüche 1 bis 6, **dadurch gekennzeichnet, dass** die Isolierelemente (3, 3a, 3b) nebst einer Hüllen-Innenlage aus Glasfasergewebe zumindest bereichsweise eine weitere Dämpfungsmembran (4) umfassen.

8. Schallisolierung nach Anspruch 7, **dadurch gekennzeichnet, dass** die Isolierelemente (3, 3a, 3b) mindestens eine Hüllen-Zwischenlage (8), gegebenenfalls zwischen dem festen Flachmaterial (9) und dem Isoliermaterial (7), vorzugsweise aber zwischen zwei Lagen des Isoliermaterials, umfassen und/oder dass die Hüllenlagen, insbesondere die Hüllen-Innenlage (5) und gegebenenfalls die Zwischenlage (8) mit Draht durchwoben sind und/oder dass die Hüllen-Aussenlage (10) mit Silikon beschichtet ist.

9. Schallisolierung nach Anspruch 7 oder 8, **dadurch gekennzeichnet, dass** die Isolierelemente (3, 3a, 3b) an den Hüllen-Aussenlagen (10) befestigte erste Klettbänder (11) und Lappen (12) mit passenden zweiten Klettbändem (13) umfassen, so dass aneinander anschliessende Isolierelemente (3, 3a, 3b) mittels Klettverbindungen (21), die sich vorzugsweise entlang der gesamten Kontaktbereiche zwischen den zu verbindenden Isolierelementen (3, 3a, 3b) erstrecken, verbindbar sind.

10. Schallisolierung nach einem der Ansprüche 1 bis 9, **dadurch gekennzeichnet, dass** mindestens zwei Isolierelemente (3), vorzugsweise mit ihren unteren Stirnseiten auf einer elastischen Schicht (14) stehend, zu einem geschlossenen Mantel zusammengestellt sind und dieser Mantel an der oberen Stirnseite mit mindestens einem weiteren Isolierelement (3a), das gegebenenfalls ring- bzw. teilringförmig ist, verbunden ist, wobei vorzugsweise eine Kontrollöffnung (15) an der oberen Stirnseite oder im Mantel mit einem Deckel (16) bzw. einer Abdeckung, der bzw. die zwei beabstandet angeordneten transparenten Platten (17) umfasst, verschliessbar ist.

## Claims

1. A soundproofing system for insulating sound generating devices or installation parts, in particular vibration conveyers or vibrators, including interconnectable insulation elements (3, 3a, 3b) which are lined by an inner lining in the direction of the sound source and by an outer lining in the direction away from the sound source and which comprise a covering made of textile material, including an inner skin at the inner lining and an outer skin at the outer lining and within the covering an insulation material (7) with a hollow cavity component, wherein the inner skin is a sound absorbing membrane (4) made of a textile material, **characterized in that** a stable flat material is located within the covering, defining by its shape the shape of said interconnectable insulating element and building a sound reflecting surface.

2. A soundproofing system according to Claim 1, **characterized in that** the textile material of the sound absorbing membrane (4) is a woven, knit or braided fabric, a net or optionally a screen, and preferably includes a wire.

3. A soundproofing system according to Claim 1 or 2, **characterized in that** the textile material of the sound absorbing membrane (4) is a fiberglass cloth, preferably with wire woven into it.

4. A soundproofing system according to one of Claims 1 through 3, **characterized in that** the textile material of the sound absorbing membrane (4) comprises a wire cloth which is preferably designed as a microfilter cloth and has in particular a wire diameter in the range of 0.02 mm to 0.4 mm and a mesh count in the range of 80 to 1000 per cm in one direction, preferably a warp wire diameter of 0.042 mm and a weft wire diameter of 0.125 mm, a mesh count of 600 x 125 per cm² and a weight of approx. 850 kg/m².

5. A soundproofing system according to one of Claims 1 through 4, **characterized in that** the insulation material (7) consists of long-fiber layer material, preferably silicate fiber mats, and has cohesive air channel systems for absorption of sound in the high frequency range.

6. A soundproofing system according to one of Claims 1 through 5, **characterized in that** the stable flat material (9) comprises at least one metal layer having a thickness of at least 1.5 mm, preferably essentially 2 mm, in particular less than 6 mm, where the stable flat material (9) optionally also comprises at least one layer of rubber or rubbery material.

7. A soundproofing system according to one of Claims 1 through 6, **characterized in that** the insulation elements (3, 3a, 3b) comprise at least in partial areas an additional sound absorbing membrane (4) in addition to an inner skin consisting of a fiberglass cloth.

8. A soundproofing system according to Claim 7, **characterized in that** the insulation elements (3, 3a, 3b) comprise at least one covering interlayer (8), optionally between the stable flat material (9) and the insulation material (7), but preferably between two layers of the insulation material (7), and/or wire, in particular V4A wire, is woven through the covering skins, in particular the inner skin (5) and optionally the interlayer (8), and/or the covering outer skin (10) is coated with silicone.

9. A soundproofing system according to Claim 7 or 8, **characterized in that** the insulation elements (3, 3a, 3b) comprise first velcro strips (11) attached to the covering outer skins (10) and tabs (12) with second velcro strips (13) that fit with the former, so that adjacent insulation elements (3, 3a, 3b) can be connected by velcro fasteners (21) which preferably extend along all the contact areas between the insulation elements (3, 3a, 3b) that are to be connected.

10. A soundproofing system according to one of Claims 1 through 9, **characterized in that** at least two insulation elements (3), preferably standing with their lower end faces on an elastic layer (14), are combined to form a closed jacket, and this jacket is connected at its upper end face to at least one other insulation element (3a) which is optionally in the shape of a ring or a partial ring, preferably with a control opening (15) on the upper end face or in the jacket being connectable to a cover (16) or a covering comprising two transparent sheets (17) arranged with a distance between them.

## Revendications

1. Dispositif d'isolation acoustique pour isoler des appareils ou des parties d'installations produisant du bruit et, en particulier des appareils propageant des vibrations, comme par exemple des vibreurs, comprenant des éléments isolants (3, 3a, 3b) qui peuvent être fixés ensemble, qui sont délimités par une interface interne faisant face à la source de bruit et par une interface externe sur le côté opposé, et qui comportent une enveloppe textile avec une couche d'enveloppe interne dans la région de l'interface interne et une couche d'enveloppe externe dans la région de l'interface externe, ainsi qu'un matériau isolant (7) qui est disposé à l'intérieur de l'enveloppe et qui a un espace partiel vide, où la couche d'enveloppe interne est une membrane (4) amortissant les bruits en un matériau textile, **caractérisé en ce que** dans la coque, on trouve un matériau plat rigide (9), qui se présente sous la forme d'une plaque rigide conférant de la rigidité à chaque élément isolant et fournissant une surface réfléchissant le bruit.

2. Dispositif d'isolation acoustique selon la revendication 1, **caractérisé en ce que** le matériau textile de la membrane (4) amortissant le bruit est un tissu, une toile, un treillis, un filet ou, le cas échéant, un tissu maillé et qu'il comprend en outre et de préférence, du fil métallique incorporé par tissage.

3. Dispositif d'isolation acoustique selon la revendication 1 ou la revendication 2, **caractérisé en ce que** le matériau textile de la membrane (4) amortissant le bruit est un tissu de filaments de verre comprenant, de préférence, du fil métallique incorporé par tissage.

4. Dispositif d'isolation acoustique selon l'une des revendications 1 à 3, **caractérisé en ce que** le matériau textile de la membrane (4) amortissant le bruit contient un tissu de fils métalliques, qui est, de préférence, un tissu de micro-filtration constitué de fils métalliques ayant, plus particulièrement, un diamètre dans la plage de 0,02 mm à 0,4 mm avec un nombre de mailles suivant une direction dans la plage de 80 à 1 000 mailles par centimètre et surtout, de fils métalliques ayant un diamètre de 0,042 mm dans la direction de la chaîne, un diamètre de 0,125 mm dans la direction de la trame, avec 600 x 125 mailles par centimètre carré et un poids d'environ 0,850 kg / m².

5. Dispositif d'isolation acoustique selon l'une des revendications 1 à 4, **caractérisé en ce que** le matériau isolant (7) est réalisé sous la forme d'une couche d'un matériau constitué de fibres longues, de préférence, de fibres de silicate et **en ce qu'**il présente un système de canal d'air associé pour assurer l'absorption des sons aigus.

6. Dispositif d'isolation acoustique selon l'une des revendications 1 à 5, **caractérisé en ce que** le matériau plat rigide (9) comprend au moins une couche métallique, dont l'épaisseur est d'au moins 1,5 mm, de préférence, sensiblement égale à 2 mm, mais inférieure à 6 mm, ce matériau plat rigide (9) portant, le cas échéant, au moins une couche de caoutchouc ou d'un matériau similaire à du caoutchouc.

7. Dispositif d'isolation acoustique selon l'une des revendications 1 à 6, **caractérisé en ce que** les éléments isolants (3, 3a, 3b) comportent, en plus de la couche d'enveloppe interne en tissu de fibres de verre et au moins dans certaines régions, une autre membrane (4) amortissant le bruit.

8. Dispositif d'isolation acoustique selon la revendication 7, **caractérisé en ce que** les éléments isolants (3, 3a, 3b) comportent au moins une couche d'enveloppe intermédiaire (8) agencée, le cas échéant, entre le matériau plat rigide (9) et le matériau isolant (7) et, de préférence, entre deux couches du matériau isolant et / ou **en ce que** les couches d'enveloppe, en particulier la couche d'enveloppe interne (5) et, le cas échéant, la couche d'enveloppe intermédiaire (8), contiennent du fil métallique tissé et / ou **en ce que** la couche d'enveloppe externe (10) porte un revêtement en silicone.

9. Dispositif d'isolation acoustique selon la revendication 7 ou la revendication 8, **caractérisé en ce que** les éléments isolants (3, 3a, 3b) comportent, sur les couches d'enveloppe externes (10) des premières bandes de chaîne (11) et des languettes (12) fixée à de secondes bandes de chaîne adaptées (13), de sorte que les éléments isolants (3, 3a, 3b) mutuellement contigus sont tenus ensemble au moyen de connections de chaîne (21) qui s'étendent, de préférence, le long de la région de contact totale entre les éléments isolants (3, 3a, 3b) devant être liés ensemble.

10. Dispositif d'isolation acoustique selon l'une des revendications 1 à 9, **caractérisé en ce qu'**au moins deux éléments isolants (3) reposent, de préférence, par leurs côtés inférieurs sur une couche élastique (14), pour constituer ensemble une enceinte fermée et **en ce qu'**à la face supérieure de cette enceinte est fixé au moins un autre élément isolant (3a) qui a, le cas échéant, une forme annulaire ou partiellement annulaire, une ouverture de contrôle (15) étant aménagée sur la face supérieure de l'enceinte, qui peut être fermée grâce à un élément couvrant ou un couvercle (16), constitué par deux plaques transparentes (17), disposées à une certaine distance l'une de l'autre.
